# EUROPEAN PATENT APPLICATION

(11) **EP 3 613 554 A1**
(43) Date of publication of application: **26.02.2020**
(21) Application number: 18397522.6
(22) Date of filing: 21.08.2018
(51) Int. Cl.: B29C 48/88, B29C 48/09, B29C 48/355, B29C 48/76, B29C 35/02, B29C 53/08, B29C 35/10

(54) **A METHOD AND A SYSTEM FOR MANUFACTURING A POLYMER PIPE**

(71) Applicant: Crosslink Finland Oy, 33540 Tampere (FI); PexCor Manufacturing Company Inc., Calgary, AB T2E 6M3 (CA)
(72) Inventor: Heino, Aarne, 33540 Tampere (FI); Schmidt, Gerhard, Calgary Alberta (CA)
(74) Representative: Berggren Oy, Tampere

(57) **Abstract**

The specification relates to a method and a system for manufacturing a polymer pipe, wherein polymer material is extruded in form of a pipe from an extruder head, the polymer pipe is forwarded to a crosslinking oven for crosslinking, and heated by at least one heating unit in the crosslinking oven, before deflecting an orientation of the polymer pipe by a pulling wheel. The outer surface of the polymer pipe is cooled and/or flushed by at least one gas flow, which at least one gas flow is arranged to flow in a lengthwise direction of the polymer pipe, and the at least one gas flow is removed by an extractor.

## Description

### Technical field

This specification relates to a method and a system for manufacturing a polymer pipe. More particularly, the specification relates to a method and a system for manufacturing a crosslinked polymer pipe.

### Background

Crosslinking of a polymer product is obtained by heating the product. The heating may be performed by infrared radiation, by using wavelengths that penetrate the product in such a way that the heating occurs simultaneously and similarly in all depths of the product. Infrared radiation consists of distribution of different wavelengths. The wavelength distribution follows approximately Gaussian curve, and the wavelength distribution comprises rays of long wavelengths. The rays of long wavelengths do not penetrate into a polymer material. Rather, the rays of long wavelengths get absorbed by outer surface a polymer product, thus causing inconvenient overheating of the polymer product. Overheating may cause the outer surface of the polymer product to become oxidized or to react in other ways unwantedly.

### Summary

This specification provides a method for manufacturing a crosslinked polymer pipe, by which method the overheating of outer surface of the polymer pipe during crosslinking is prevented, and nuisances caused by gaseous crosslinking residuals are diminished. The specification also provides a system for manufacturing crosslinked polymer pipe by the method disclosed.

According to an aspect of the specification a method for manufacturing a polymer pipe is provided. The method comprises
- extruding polymer material in form of a pipe from an extruder head,
- forwarding the polymer pipe to a crosslinking oven for crosslinking,
- heating the polymer pipe by at least one heating unit in the crosslinking oven, before deflecting an orientation of the polymer pipe by a pulling wheel, and
- directing at least one gas flow along the outer surface of the polymer pipe, wherein the at least one gas flow is arranged to flow in a lengthwise direction of the polymer pipe;
the method further comprises removing the at least one gas flow by an extractor.

According to another aspect of the specification a system for manufacturing a polymer pipe is provided. The system comprises
- an extruder head for extruding polymer material in form of a pipe,
- a crosslinking oven for crosslinking the polymer material,
- at least one heating unit in the crosslinking oven,
- a pulling wheel for deflecting an orientation of the polymer pipe, and
- at least one gas flow inlet for providing a gas flow for directing at least one gas flow along the outer surface of the polymer pipe in a lengthwise direction of the polymer pipe;
the system further comprises an extractor for removing the gas flow.

### Brief description of the drawings

The embodiments will be described in more detail with reference to the appended drawings, in which
- Figure 1: shows an overview of the system according to an embodiment,
- Figure 2: shows an overview of the system according to another embodiment, and
- Figure 3: shows an overview of the system according to still another embodiment.

The figures are presented to illustrate the disclosed embodiments, and are not to be taken to be limiting the scope of their use. The figures are not in any particular scale.

### Detailed description

The invention is described in the following in more detail with reference to some embodiments, which shall not be regarded as limiting the invention.

In this specification, "a pipe" refers to a hollow elongated tube or cylinder for conducting e.g. a liquid, gas or finely divided solid. The pipe comprises an inner surface and an outer surface. The inner surface of the pipe refers to the surface that is adapted to be in contact with the substance to be conducted by the pipe. The outer surface of the pipe refers to the opposite surface of the pipe.

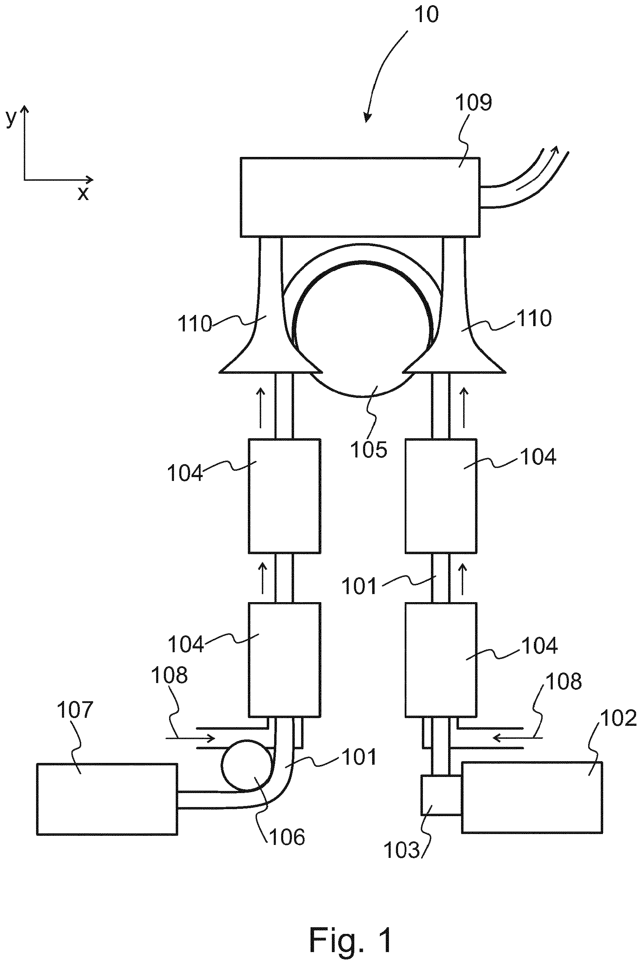

"A horizontal plane" refers to a horizontal ground plane or a horizontal floor plane. The horizontal plane is parallel with the x-axis shown in Figure 1.

"A vertical plane" refers to a plane that is vertical with respect to the horizontal ground plane or horizontal floor plane. The vertical plane is parallel with the y-axis and vertical with respect to the x-axis shown in Figure 1.

"Machine direction" refers to a direction in which the pipe proceeds during manufacturing process. Machine direction is from extruder to cooling tub.

The term "gaseous crosslinking residuals" refers to gaseous elements, substances or compounds that are remaining after the crosslinking reaction. The gaseous crosslinking residuals may be unreacted or reacted elements, substances or compounds, or they may be products of crosslinking reaction or reactions related to it.

Crosslinking is a process for linking polymer chains to one another, thus causing a spatial network to be formed. In the synthetic polymer science field, crosslinking usually refers to the use of crosslinks to promote a difference in the polymers' physical properties. Crosslinked polyethylene (PEX) is a form of polyethylene with crosslinks. PEX contains crosslinked bonds in the polymer structure, which crosslinked bonds enable change of a thermoplastic polymer to a thermoset polymer.

There are three main manufacturing processes for preparing crosslinked polymer pipes: peroxide method, silane method and electronic irradiation method. This specification relates to the peroxide method, in which the crosslinking is achieved by means of radicals. The radicals are formed by means of additives such as organic peroxides or azo-compounds.

In crosslinking, a polymer that is to be crosslinked is mixed with a an additive before extrusion. In a case of the peroxide method the crosslinking reaction is triggered by heating. The mixture containing the polymer and the additive is heated during and/or after the extrusion in order to initiate the formation of a spatial network. The heating after the extrusion may be implemented for example by a heating tool (conduction), a heat transfer from a liquid, hot air or infrared radiation.

Infrared radiation provides fast heating of the extruded material throughout its entire thickness, as the infrared radiation is able to penetrate through the polymer material. This enables a high manufacturing speed. Moreover, the contactless heating provided by the infrared radiation results in a high surface finish.

As mentioned in the background section, the infrared rays of long wavelengths get absorbed by outer surface a polymer material. This may cause inconvenient overheating of the polymer material. Overheating may cause the outer surface of the polymer material to become oxidized or to react in other ways unwantedly. Cooling of the outer surface of the polymer material may be adapted to prevent overheating of the outer surface of the polymer material. Cooling of the polymeric material may be performed by gas flow.

Use of a volatile crosslinking additive is advantageous, as the unreacted additive is capable of evaporation. Thus, the possible unreacted crosslinking additives will become released into surrounding air. This avoids remaining of the unreacted additives in the crosslinked products, which might cause odor and/or taste problems or even problems related to health, especially in the case of potable water pipes.

Whereupon a gas flow is utilized for cooling and/or flushing the extruded polymeric material, gaseous crosslinking residuals are mixed with the gas flow. Gaseous crosslinking residuals, which may include the unreacted additives, may be harmful to human being. Gaseous crosslinking residuals may be harmful when in contact for example with skin or eyes, or when inhaled. The nuisances caused by the gaseous crosslinking residuals may be diminished by leading the gas flow comprising gaseous crosslinking residuals to the extractor and via the extractor outlet away from the manufacturing room, as disclosed in this specification. The direction of propagation of the gas flow for cooling and/or flushing the polymer pipe is in a lengthwise direction of the polymer pipe and away from the personnel running the system.

A system and a method for manufacturing a polymer pipe according to this specification are representatives of a so-called open-atmosphere crosslinking. The open-atmosphere crosslinking is performed in a separate crosslinking oven, thus deviating from the so-called closed-atmosphere crosslinking performed inside an extruder.

The system 10 for manufacturing a polymer pipe 101 shown in Figure 1 comprises an extruder 102. The extruder 102 comprises an extruder head 103. The extruder head 103 is located outside the crosslinking oven, arranged to open into said oven. The extruder head 103 may be parallel or angled with respect to the horizontal plane.

The crosslinking oven comprises at least one heating unit 104. After the at least one heating unit 104 a pulling wheel 105 is arranged. The crosslinking oven may comprise more than one heating units 104. The crosslinking oven may comprise successive heating units 104 before the pulling wheel 105 in the machine direction and successive heating units 104 after the pulling wheel 105 in the machine direction. The heating unit(s) 104 may be arranged in a vertical orientation with respect to the horizontal ground plane, as illustrated in Figure 1. Alternatively, the heating unit(s) 104 may be arranged in an inclined or lopsided manner with respect to the horizontal or vertical plane.

The heating unit 104 may be an infrared unit. The infrared unit comprises infrared radiators arranged in a circular manner. The infrared unit may comprise from 4 to 12 infrared radiators. The infrared radiators comprise light sources for producing infrared light. The infrared radiators are arranged such that an even heating around the pipe to be manufactured may be provided.

The crosslinking oven comprises a pulling wheel 105. The crosslinking oven may comprise a deflection wheel 106. The deflection wheel 106 may be arranged after the pulling wheel 105 in the machine direction. After the deflection wheel, in the machine direction, a cooling tub 107 may be arranged.

The system 10 for manufacturing a polymer pipe 101 comprises at least one means for providing a gas flow 108 for cooling and/or flushing the outer surface of the polymer pipe 101. The means for providing the gas flow 108 is adapted to provide the gas flow 108 arranged to flow in a lengthwise direction of the polymer pipe 101. The means for providing the gas flow 108 may be adapted to provide the gas flow 108 vertically upwards, as illustrated in Figure 1. The gas flow and its direction are illustrated by arrows in Figures 1-3. The means for providing the gas flow 108 comprises a first gas flow inlet. The first gas flow inlet is arranged after the extruder head 103 in the machine direction. The first gas flow inlet is adapted to direct the gas flow 108 through the heating unit(s) 104. The first gas flow inlet is adapted to provide the gas flow 108, the direction of flow of which gas flow is configured to be in the machine direction. The means for providing the gas flow 108 may comprise a second gas flow inlet. The second gas flow inlet is arranged after last heating unit 104 of the crosslinking oven in the machine direction, as illustrated in Figure 1. The second gas flow inlet is adapted to direct the gas flow 108 through the heating unit(s) 104. The second gas flow inlet is adapted to provide the gas flow 108, the direction of flow of which gas flow is configured to be opposite to the machine direction.

The system 10 for manufacturing a polymer pipe 101 comprises an extractor 109 for removal of the gas flow 108. The gas flow(s) 108 provided by the gas flow inlet(s) is/are arranged to proceed via heating unit(s) 104. The gas flow(s) 108 is/are arranged to be directed through the heating unit(s) 104. The extractor 109 comprises at least one extractor inlet 110. The extractor inlet 110 is arranged after the last heating unit 104 in the machine direction before the pulling wheel 105 and/or before the first heating unit 104 in the machine direction after the pulling wheel 105. The extractor 109 comprises an extractor outlet for leading the gas flow 108 away from a manufacturing room.

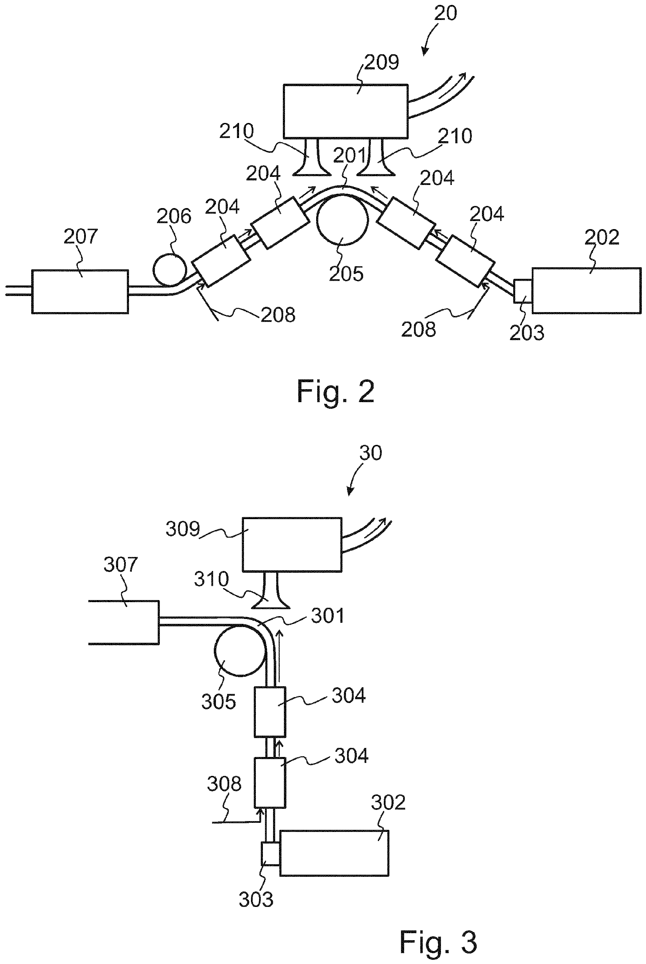

According to an embodiment, the heating units 204 may be arranged in an inclined or lopsided manner with respect to the horizontal or vertical plane, as illustrated in Figure 2. In that case, also the extractor inlet(s) may be arranged such that it/they is/are aligned with the incoming gas flow(s) 208. The means for providing the gas flow 208 is adapted to provide the gas flow 208 in an inclined or lopsided manner. The gas flow(s) 208 is/are arranged to proceed via heating unit(s) 204. The gas flow(s) 208 is/are arranged to be directed through the heating unit(s) 204. The extruder head 203 may be parallel or angled with respect to the horizontal plane.

The first gas flow inlet may be arranged after the first heating unit of the crosslinking oven in the machine direction. The second gas flow inlet may be arranged after next-to-last heating unit of the crosslinking oven in the machine direction. By this arrangement, more space will be provided at the proximity of the extruder head as well as the deflection wheel.

The first gas flow inlet may be arranged between the last and the second-to-last heating unit of the crosslinking oven before the pulling wheel in the machine direction. This is especially useful when using a gas flow having such a temperature that it might cause unnecessary cooling of the outer surface of the polymer pipe. By this arrangement, the unnecessarily efficient cooling effect and thus the possible weakening of the quality of the crosslinked polymer pipe may be avoided.

The first and second gas flow inlets may be arranged at different levels with respect to the vertical plane. For example, the first gas flow inlet may be arranged before the first heating unit of the crosslinking oven in the machine direction, while the second gas flow inlet may be arranged before the last heating unit of the crosslinking oven in the machine direction. This flexibility in the crosslinking oven design enables providing effective cooling and/or flushing of the exterior of the polymer pipe.

According to another embodiment illustrated in Figure 3, the system for manufacturing the polymer pipe 301 comprises the extruder 302. The extruder 302 comprises the extruder head 303, which is angled with respect to the horizontal plane. The extruder head 303 is located outside the crosslinking oven, arranged to open into said oven. The crosslinking oven comprises at least one heating unit 304 arranged in a vertical orientation. After the at least one heating unit 304 a pulling wheel 305 is arranged. The crosslinking oven may comprise more than one heating units 304. The crosslinking oven may comprise successive heating units 304 before the pulling wheel 305 in the machine direction. The heating unit 304 may be an infrared unit. The crosslinking oven comprises a pulling wheel 305. After the pulling wheel 305, a cooling tub 307 is arranged. The system comprises a means for providing a gas flow 308 for cooling and/or flushing the outer surface of the polymer pipe 301. The means for providing the gas flow is adapted to provide the gas flow 308 arranged to flow in a lengthwise direction of the polymer pipe 301. The means for providing the gas flow 308 is adapted to provide the gas flow 308 vertically upwards. The means for providing the gas flow 308 comprises a gas flow inlet. The first gas flow inlet is arranged after the extruder head 303 in the machine direction. The first gas flow inlet is adapted to provide the gas flow 308, the direction of flow of which gas flow is configured to be in the machine direction. The system comprises an extractor 309 for removal of the gas flow 308. The gas flow 308 provided by the gas flow inlet is arranged to proceed via heating unit(s) 304. The gas flow 308 is arranged to be directed through the heating unit(s) 304. The extractor 309 comprises at least one extractor inlet 310. The extractor inlet 310 is arranged after the last heating unit 304 in the machine direction before the pulling wheel 305. The extractor 309 comprises an extractor outlet for leading the gas flow 308 away from a manufacturing room.

In a method for manufacturing a polymer pipe 101, 201, 301, starting materials are fed in an extruder 102, 202, 302. The starting materials comprise a polymer and a crosslinking additive. The starting materials may comprise polyethylene and organic peroxide. The starting materials are heated and mixed in the extruder 102, 202, 302, after which the polymer pipe 101, 201, 301 is continuously formed in an extruder head 103, 203, 303. Polymer material is extruded in form of a pipe from the extruder head 103, 203, 303. The formed polymer pipe 101, 201, 301 is forwarded to a crosslinking oven. In the crosslinking oven, the polymer pipe 101, 201, 301 proceeds through heating unit(s) 104, 204, 304. In the crosslinking oven, the polymer pipe 101, 201, 301 gets heated by at least one heating unit 104, 204, 304. When the crosslinking oven comprises several successive heating units 104, 204, 304, the polymer pipe 101, 201, 301 gets heated by all of the successive heating units 104, 204, 304.

From the successive heating unit(s) 104, 204, 304, the polymer pipe 101, 201, 301 is pulled by a pulling wheel 105, 205, 305. The orientation of the polymer pipe 101, 201, 301 is deflected by the pulling wheel 105, 205, 305. The pulling wheel 105, 205, 305 may direct the polymer pipe 101, 201, 301 forwards to at least one heating unit 104, 204 or to a cooling tub 307.

When the pulling wheel 105, 205 directs the polymer pipe 101, 201 to at least one heating unit 104, 204, the polymer pipe 101, 201 proceeds through the heating unit(s) 104, 204 and gets heated by the heating unit(s) 104, 204. After the at least one heating unit 104, 204 or the successive heating units 104, 204 arranged after the pulling wheel 105, 205, the orientation of the polymer pipe 101, 201 is deflected by a deflection wheel 106, 206. The deflection wheel 106, 206 directs the polymer pipe 101, 201 to the cooling tub 107, 207.

The polymer pipe is cooled in the cooling tub 107, 207, 307. Cooling of the polymer pipe 101, 201, 301 terminates the crosslinking reaction taking place in the polymer material. Cooling of the polymer pipe 101, 201, 301 is carried out for example by cold water or water spray.

In the crosslinking oven, the outer surface of the polymer pipe 101, 201, 301 is cooled and/or flushed by at least one gas flow 108, 208, 308 arranged to flow in a lengthwise direction of the polymer pipe 101, 201, 301. The at least one gas flow 108, 208, 308 is directed along the outer surface of the polymer pipe 101, 201, 301. The gas flow 108, 208, 308 has a direction of flow. The gas flow 108, 208, 308 is arranged to proceed through the heating unit(s) 104, 204, 304. After the heating unit(s) 104, 204, 304, in the direction of flow, the gas flow 108, 208, 308 is taken in by the extractor 109, 209, 309 for removal of the gas flow 108, 208, 308.

The gas flow 108, 208, 308 may comprise air, nitrogen, or any other gas suitable for cooling and/or flushing. A purpose of the gas flow 108, 208, 308 is to cool and/or flush the outer surface of the polymer pipe 101, 201, 301. Cooling of the outer surface of the polymer pipe 101, 201, 301 may be adapted to prevent overheating of the outer surface of the polymer pipe 101, 201, 301. Overheating may cause the outer surface of the polymer pipe 101, 201, 301 to oxidize or to react other way unwantedly. Further, another purpose of the gas flow 108, 208, 308 is to flush gaseous crosslinking residuals away from the exterior of the polymer pipe 101, 201, 301. The gas flow 108, 208, 308 may comprise gas collected from the heating unit 104, 204, 304 of the crosslinking oven. This provides the advantage, that there is no need to provide separate gas to be directed along the outer surface of the polymer pipe, but the gas provided by the heating units may be utilized. The gas collected from the heating units may originate from cooling of the heating units. The gas collected from the heating units may be warm.

According to embodiments, the gas flow 108, 208, 308 is directed vertically or lopsidedly upwards towards the pulling wheel 105, 205, 305. The gas flow 108, 208, 308 is led to the extractor 109, 209, 309 for removal of the gas flow 108, 208, 308. The extractor 109, 209, 309 is positioned in the proximity of the pulling wheel 105, 205, 305, namely in the upper part of the system and substantially above the ground plane or floor plane. When the direction of flow of the gas flow 108, 208, 308 is vertically or lopsidedly upwards, and thus away from the personnel operating the system, the possible effects caused by the gas flow comprising the gaseous crosslinking residuals to the personnel are minimized.

A method for manufacturing a polymer pipe is provided. The method comprises extruding polymer material in form of a pipe from an extruder head, forwarding the polymer pipe to a crosslinking oven for crosslinking, heating the polymer pipe by at least one heating unit in the crosslinking oven, before deflecting an orientation of the polymer pipe by a pulling wheel, and directing at least one gas flow along the outer surface of the polymer pipe. The at least one gas flow is arranged to flow in a lengthwise direction of the polymer pipe. The method further comprises removing the at least one gas flow by an extractor. The method may comprise providing a first gas flow from a first gas flow inlet arranged after the extruder head in a machine direction. The method may comprise providing a second gas flow from a second gas flow inlet arranged after last heating unit of the crosslinking oven in the machine direction. The method may comprise taking in the gas flow by at least one extractor inlet arranged after last heating unit in the machine direction before the pulling wheel and/or before the first heating unit in the machine direction after the pulling wheel. The heating unit may be an infrared unit. The at least one gas flow may comprise a gas collected from the heating unit of the crosslinking oven.

A system for manufacturing a polymer pipe is provided. The system comprises an extruder head for extruding polymer material in form of a pipe, a crosslinking oven for crosslinking the polymer material, at least one heating unit in the crosslinking oven, a pulling wheel for deflecting an orientation of the polymer pipe, and at least one gas flow inlet for providing a gas flow to be directed along the outer surface of the polymer pipe in a lengthwise direction of the polymer pipe. The system further comprises an extractor for removing the gas flow. The system may comprise a first gas flow inlet arranged after the first heating unit of the crosslinking oven in a machine direction. The system may comprise a second gas flow inlet arranged after next-to-last heating unit of the crosslinking oven in the machine direction. The system may comprise at least one extractor inlet arranged after last heating unit of the crosslinking oven in the machine direction before the pulling wheel and/or before the first heating unit of the crosslinking oven in the machine direction after the pulling wheel. The heating unit may be an infrared unit. The system may comprise means for collecting gas from the heating unit of the crosslinking oven and for directing the gas to be used as the at least one gas flow.

Many variations of the present application will suggest themselves to those skilled in the art in light of the description above. Such obvious variations are within the full intended scope of the appended claims.

## Claims

1. A method for manufacturing a polymer pipe (101, 201, 301), the method comprising
- extruding polymer material in form of a pipe from an extruder head (103, 203, 303),
- forwarding the polymer pipe (101, 201, 301) to a crosslinking oven for crosslinking,
- heating the polymer pipe (101, 201, 301) by at least one heating unit (104, 204, 304) in the crosslinking oven, before deflecting an orientation of the polymer pipe (101, 201, 301) by a pulling wheel (105, 205, 305),
- directing at least one gas flow (108, 208, 308) along the outer surface of the polymer pipe (101, 201, 301), wherein the at least one gas flow (108, 208, 308) is arranged to flow in a lengthwise direction of the polymer pipe (101, 201, 301),
**characterized in that** the method further comprises removing the at least one gas flow (108, 208, 308) by an extractor (109, 209, 309).

2. A method for manufacturing a polymer pipe (101, 201, 301) according to claim 1, wherein the method comprises providing a first gas flow (108, 208, 308) from a first gas flow inlet arranged after the extruder head (103, 203, 303) in a machine direction.

3. A method for manufacturing a polymer pipe (101, 201, 301) according to claim 1 or 2, wherein the method comprises providing a second gas flow (108, 208, 308) from a second gas flow inlet arranged after last heating unit (104, 204, 304) of the crosslinking oven in the machine direction.

4. A method for manufacturing a polymer pipe (101, 201, 301) according to any of the previous claims, wherein the method comprises taking in the gas flow by at least one extractor inlet arranged after last heating unit (104, 204, 304) in the machine direction before the pulling wheel (105, 205, 305) and/or before the first heating unit (104, 204) in the machine direction after the pulling wheel (105, 205).

5. A method for manufacturing a polymer pipe (101, 201, 301) according to any of the previous claims, wherein the heating unit (104, 204, 304) is an infrared unit.

6. A method for manufacturing a polymer pipe (101, 201, 301) according to any of the previous claims, wherein the at least one gas flow (108, 208, 308) comprises gas collected from the heating unit (104, 204, 304) of the crosslinking oven.

7. A system (10, 20, 30) for manufacturing a polymer pipe (101, 201, 301), the system comprising
- an extruder head (103, 203, 303) for extruding polymer material in form of a pipe,
- a crosslinking oven for crosslinking the polymer material,
- at least one heating unit (104, 204, 304) in the crosslinking oven,
- a pulling wheel (105, 205, 305) for deflecting an orientation of the polymer pipe (101, 201, 301),
- at least one gas flow inlet for providing a gas flow (108, 208, 308) to be directed along the outer surface of the polymer pipe (101, 201, 301) in a lengthwise direction of the polymer pipe (101, 201, 301),
**characterized in that** the system further comprises an extractor (109, 209, 309) for removing the gas flow (108, 208, 308).

8. A system (10, 20, 30) for manufacturing a polymer pipe (101, 201, 301) according to claim 7, comprising a first gas flow inlet arranged after the first heating unit (104, 204, 304) of the crosslinking oven in a machine direction.

9. A system (10, 20) for manufacturing a polymer pipe according to claim 7 or 8, comprising a second gas flow inlet arranged after next-to-last heating unit (104, 204) of the crosslinking oven in the machine direction.

10. A system (10, 20, 30) for manufacturing a polymer pipe according to any of claims 7-9, comprising at least one extractor inlet (110, 210, 310) arranged after last heating unit (104, 204, 304) of the crosslinking oven in the machine direction before the pulling wheel (105, 205, 305) and/or before the first heating unit (104, 204) of the crosslinking oven in the machine direction after the pulling wheel (105, 205).

11. A system (10, 20, 30) for manufacturing a polymer pipe according to any of claims 7-10, wherein the heating unit (104, 204, 304) is an infrared unit.

12. A system (10, 20, 30) for manufacturing a polymer pipe according to any of claims 7-11, comprising means for collecting gas from the heating unit (104, 204, 304) of the crosslinking oven and for directing the gas to be used as the at least one gas flow (108, 208, 308).
